# EUROPÄISCHE PATENTSCHRIFT

(11) **EP 2 213 901 B1**
(45) Veröffentlichungstag und Bekanntmachung des Hinweises auf die Patenterteilung: **28.09.2011**
(21) Anmeldenummer: 09015920.3
(22) Anmeldetag: 23.12.2009
(51) Int. Cl.: F16D 65/12

(54) **Bremsscheibe für Scheibenbremsen sowie Verfahren zur Herstellung einer Bremsscheibe**
Brake disc for disk brakes and method for producing a brake disc
Disque de frein pour frein à disque ainsi que procédé de fabrication d'un disque de frein

(30) Priorität: 30.01.2009 DE 102009006813
(43) Veröffentlichungstag der Anmeldung: 04.08.2010
(73) Patentinhaber: Audi AG, 85045 Ingolstadt (DE)
(72) Erfinder: Yarim, Rasim, 85053 Ingolstadt (DE)
(74) Vertreter: Asch, Konrad

(56) Entgegenhaltungen:
- DE-A1- 4 208 930
- DE-A1- 4 322 113
- DE-A1- 19 505 724
- DE-C1- 4 413 306
- DE-U1- 29 617 774

## Beschreibung

Die Erfindung betrifft eine Bremsscheibe für Scheibenbremsen, insbesondere in Kraftfahrzeugen, gemäß dem Oberbegriff des Patentanspruches 1 sowie ein Verfahren zur Herstellung der Bremsscheibe nach Patentanspruch 12.

Eine Bremsscheibe der gattungsgemäßen Art beschreibt beispielsweise die DE-C-44 13 306. Bei der DE 10 2006 004 156 A1 ist auf eine Tragscheibe aus Grauguss im Bereich der mit Bremsbelägen zusammenwirkenden Reibringe eine verschleißfeste Beschichtung aus Cr/Ni-Stahl durch thermisches Spritzen aufgebracht.

Aufgabe der Erfindung ist es, eine Bremsscheibe sowie ein Herstellungsverfahren hierfür vorzuschlagen, das fertigungstechnisch günstig und prozesssicher eine in noch verbessertem Umfange auf Verschleiß- und Reiboberflächen einstellbare Beschichtung ermöglicht.

Diese Aufgabe wird erfindungsgemäß mit den Merkmalen des Patentanspruches 1 oder 12 gelöst. Vorteilhafte Weiterbildungen der Erfindung sind den weiteren Patentansprüchen entnehmbar.

Erfindungsgemäß wird vorgeschlagen, dass die Beschichtung durch ein Granulat aus Hartstoffen mit vorgegebener Korngrößenverteilung gebildet ist, das auf die Tragscheibe aufgebracht und mit der Tragscheibe fest verbunden ist.

Die feste Verbindung der verschleißfesten Beschichtung mit der Tragscheibe erfolgt mittels Mikrowellenenergie metallurgisch. Alternativ kann das Granulat auch ausschließlich mechanisch mit der Tragscheibe verbunden sein.

Durch Auswahl des Granulats und dessen Durchmischung können eine Vielzahl von für die Tribologie und das Verschleißverhalten von Bremsscheiben auch unter hohen Betriebstemperaturen maßgeblichen Parametern eingestellt und beispielsweise durch Aufbringen von Mikrowellenenergie prozesssicher auf die Tragscheibe aufgebracht werden.

Bei der Mikrowellenbestrahlung wird das auf die Tragscheibe aufgebrachte Granulat aufgeheizt, während das Bremsscheibenmaterial nicht angeregt wird. Durch Aufbringen der Hartstoffe als Granulat kann die Korngrößenverteilung sowie die Obertlächenmorphologie der Reibbeschichtung auf der Tragscheibe gezielt eingestellt werden.

Die oben angedeutete mechanische Verbindung des Granulats mit der Tragscheibe kann durch Anpressen der Granulat-Körner, etwa SiC-Körner, auf die Oberfläche der Tragscheibe erfolgen. Hierzu wird die Tragscheibe vorab erwärmt, so dass sie beim Anpressvorgang an ihrer zu behandelnden Oberfläche elastisch deformierbar wird.

Im Unterschied zur obigen mechanischen Verbindung ist eine solche vorgeschaltete Wärmebehandlung der Tragscheibe bei der Mikrowellenbestrahlung nicht erforderlich. Bei der Mikrowellenbestrahlung wird nur das Granulat, das heißt zum Beispiel die SiC-Körner, angeregt, während die Tragscheibe, insbesondere Graugussscheibe, im Wesentlichen nicht angeregt verbleibt. Bei einer Graugussscheibe würde sich etwa nur der darin enthaltene Kohlenstoff im Bereich der Raumtemperatur geringfügig erwärmen. Insgesamt kann bei der Mikrowellenbestrahlung daher eine nachteilige Gefügeänderung der Tragscheibe vermieden werden.

Die durch Mikrowellenbestrahlung angeregten Granulat-Körner erwärmen lokal die Tragscheiben-Oberfläche, auf der sie aufgetragen sind. Dadurch wird die Tragscheiben-Oberfläche lokal angeschmolzen bzw. aufgeweicht. Die Granulat-Körner können daher geringfügig in das aufgeschmolzene Material der Tragscheibe einsinken. Alternativ oder zusätzlich können sich chemische Verbindungen zwischen dem aufgeschmolzenen Tragscheiben-Material und den Granulat-Körnern bilden, etwa Silizide.

Zur weiteren Steigerung der Befestigung des Granulats an der Tragscheibe können die durch Mikrowellenbestrahlung erwärmten Granulat-Körner zusätzlich durch mechanisches Anpressen in die aufgeschmolzene Oberfläche der Tragscheibe eingepresst werden.

Die Hartstoffe der Reibbeschichtung können bevorzugt aus Silizium, aus Oxiden, aus Karbiden, aus Boriden, aus Siliziden und/oder aus intermetallischen Verbindungen gebildet sein, wobei Kriterien für die Auswahl unter anderem die thermischen und mechanischen Anforderungen für die Bremsscheibe im Fahrbetrieb sind.

Besonders bevorzugt können die Hartstoffe aus SiC und/oder aus Si und/oder aus Kohlenstoff bestehen, wobei der Kohlenstoff insbesondere in Form von Kurzfasern mit Faserlängen von 3mm bis 100mm vorliegen sollte.

Eine weitere, besonders bevorzugte Ausgestaltung besteht darin, dass bei Verwendung von äußerst verschleißfestem SiC als Hartstoff eine Korngröße bei einem d50-Wert oberhalb von 10µm, insbesondere aber von 100µm bis 1000µm vorliegt, wodurch es gelingt, sowohl die Verschleißfestigkeit der Reibringe, als auch deren bevorzugte Rauheitswerte gezielt einzustellen. SiC ist außerdem sehr temperaturresistent, so dass es einer Temperaturentwicklung während eines Bremsvorgangs standhält. Bevorzugt ist eine Kombination einer SiC-Reibschicht mit einer Grauguss-Tragscheibe. Grauguss alleine hält Bremstemperaturen bis ca. 700°C stand. Bei höheren Temperaturen erfolgt eine Gefügeumwandlung. Mit der SiC-Reibschicht ist die Grauguss-Tragscheibe thermisch geschützt, so dass die Bremsscheibe höheren Betriebstemperaturen ausgesetzt werden kann.

Dazu kann des Weiteren bei Hartstoffen mit körnigem Granulat eine Mischung aus unterschiedlichen Korngrößen verarbeitet sein. Ferner kann die Oberflächentopografie der Beschichtung eine Rauheit mit der Kenngröße Rk>0,5µm aufweisen.

Fertigungstechnisch besonders günstig und prozesssicher, insbesondere bei einer Serienfertigung von Bremsscheiben, kann die Beschichtung mittels einer Suspension auf die Tragscheibe aufgebracht und anschließend durch Mikrowellenbestrahlung eingebrannt sein.

Alternativ kann die Beschichtung durch Aufschmieren eines entsprechenden Granulats aufgebracht und anschließend ebenfalls durch Mikrowellenbestrahlung eingebrannt sein.

Mit der bevorzugt mittels Mikrowellenbestrahlung auf insbesondere einer Grauguss-Tragscheibe aufgebrachten Reibbeschichtung kann die Lebensdauer der Bremsscheibe in den Bereich der Lebensdauer einer Keramik-Bremsscheibe verlängert werden.

In vorteilhafter Weiterbildung der Erfindung kann die Oberfläche der Reibringe zwischen 20vol.% und 100vol.% mit der Beschichtung bedeckt sein, ggf. mit dazwischen liegenden Freistellen. Derartige Freistellen können das Ansprechverhalten der Scheibenbremse zum Beispiel bei Regen vorteilhaft begünstigen, indem an den Reibringen befindliche Feuchtigkeit wirksam abgeleitet werden kann. Bei einem Flächenanteil der Hartstoff-Körner von unter 20vol% ist demgegenüber keine Steigerung der Verschleißfestigkeit der Bremsscheibe bei hohem Reibwert zu erwarten. Außerdem würde bei einer zu niedrigen Hartstoff-Verteilung der mit der Reibbeschichtung zusammenwirkende Reibbelag zu stark verschleißen. Vor diesem Hintergrund ist eine Hartstoff-Verteilung in einem Bereich von 90 bis 100vol% besonders vorteilhaft.

Die Tragscheibe kann in an sich bekannter Weise auf Fe-Basis, insbesondere aus einer Graugusslegierung, hergestellt sein. Es sind aber in Sonderfällen auch Werkstoffe auf Ti-Basis, AI-Basis, Mg-Basis, etc. einsetzbar.

Schließlich kann die Beschichtung nach deren Aufbringung durch spanende Nachbearbeitung (zum Beispiel Drehen, Fräsen, Schleifen, etc.) bevorzugt auf eine Oberflächenrauheit von 50µm>Ra>2µm eingestellt sein, um ein vorteilhaftes Bremsverhalten der Bremsscheibe im Zusammenwirken mit den Bremsbelägen bereitzustellen.

Ein Ausführungsbeispiel der Erfindung ist im folgenden mit weiteren Einzelheiten näher erläutert. Die grob schematische Zeichnung zeigt einen teilweisen Schnitt durch eine Bremsscheibe für Scheibenbremsen in Kraftfahrzeugen, auf deren Tragscheibe ein Granulat durch Mikrowellenbestrahlung als Beschichtung aufgebracht ist.

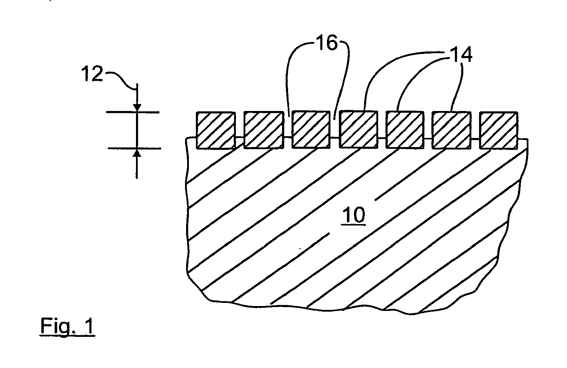

In der Zeichnung ist mit 10 ein Ausschnitt der Tragscheibe einer Bremsscheibe für Scheibenbremsen von Kraftfahrzeugen bezeichnet, die in üblicher Weise zwei Reibringe 12 (es ist nur ein Reibring 12 ersichtlich) aufweist, die mit Bremsbelägen der Scheibenbremse zusammenwirken. Die Bremsscheibe ist soweit nicht dargestellt und beschrieben bekannter Bauart.

Die Tragscheibe 10 ist aus Grauguss als Werkstoff hergestellt und entsprechend spanend auf Maßhaltigkeit bearbeitet.

Die auf die Tragscheibe 10 aufgebrachte, die Reibringe 12 bildende Beschichtung (in der Zeichnung der Einfachheit halber als Quadrate dargestellt) besteht aus einem Granulat 14 aus Hartstoffen, im Ausführungsbeispiel aus SiC (Siliziumkarbide) unterschiedlicher Korngrößen, die bei einem d50-Wert in der Größenordnung > 10µm, insbesondere zwischen 100µm bis 1000µm, in vermischter Anordnung vorliegen.

Das Granulat wird in eine Suspension eingebracht und in einem Tauchvorgang auf die Tragscheibe 10 verbracht. Sodann wird der Bereich der Reibringe 12 mit den Hartstoffen 14 einer Mikrowellenbestrahlung unterzogen, bei der durch die aufgebrachte Mikrowellenenergie das Granulat 14 in die darunter liegende Oberfläche der Tragscheibe eingebrannt bzw. mit dieser metallurgisch und stoffschlüssig verbunden wird.

Durch entsprechende Zumischung der Hartstoffe SiC im Substrat ist die Oberfläche der Reibringe zwischen 20vol.% und 100vol.%, im Ausführungsbeispiel mit ca. 80vol.%, mit der Beschichtung 12 bedeckt, mit dazwischen liegenden Freistellen 16 bzw. entsprechenden Vertiefungen. Die Oberflächentopografie der Beschichtung weist dabei durch die entsprechende Durchmischung der Hartstoffe SiC eine Rauheit mit der Kenngröße Rk>0,5µm auf.

Anschließend werden die Reibringe 12 bzw. deren Beschichtung einer spanenden Bearbeitung - im Ausführungsbeispiel durch Plandrehen deren Oberfläche mittels eines Schneidwerkzeuges - unterzogen, wobei deren Oberflächenrauheit auf einen Wert von 50µm>Ra>2µm, insbesondere auf ca. Ra = 30µm, eingestellt ist.

Die Erfindung ist nicht auf das beschriebene Ausführungsbeispiel beschränkt.

So können die Hartstoffe im Granulat 14 ggf. auch aus Silizium, aus Oxiden, aus Boriden, aus Siliziden und/oder aus intermetallischen Verbindungen gebildet sein.

Bei der ebenfalls möglichen Verwendung von Kohlenstoff als Granulat 14 kann dieser Kohlenstoff in Form von Kurzfasern mit Faserlängen von 3mm bis 100mm vorliegen und entsprechend durchmischt verarbeitet sein.

Die Beschichtung 12 mit den Granulaten 14 kann anstelle mittels einer Suspension auch aufgebracht werden, indem das pastenförmige Granulat 14 auf die Tragscheibe 10 "aufgeschmiert" und anschließend durch Mikrowellenbestrahlung eingebrannt wird.

Die Tragscheibe 10 kann ggf. anstelle auf Fe-Basis (Grauguss, Hartguss, Stahl) auch aus einer Ti-Basis, einer AI-Basis oder einer Mg-Basis gefertigt sein.

## Patentansprüche

1. Bremsscheibe für eine Scheibenbremse, insbesondere in Kraftfahrzeugen, mit einer Tragscheibe (10) aus Metall und einer verschleißfesten Beschichtung (12) an deren mit Bremsbelägen zusammenwirkenden Reibringen, wobei die Beschichtung (12) durch ein Granulat (14) aus Hartstoffen gebildet ist, das auf die Tragscheibe (10) aufgebracht und mit der Tragscheibe (10) fest verbunden ist, **dadurch gekennzeichnet, dass** das Granulat (14) mittels Mikrowellenbestrahlung metallurgisch fest mit der Tragscheibe (10) verbunden ist.

2. Bremsscheibe nach Anspruch 1, **dadurch gekennzeichnet, dass** die Hartstoffe aus Kohlenstoff, Silizium, aus Oxiden, aus Karbiden, insbesondere SiC, aus Boriden, aus Siliziden und/oder aus intermetallischen Verbindungen gebildet sind.

3. Bremsscheibe nach Anspruch 1 oder 2, **dadurch gekennzeichnet, dass** der Kohlenstoff in Form von Kurzfasern mit Faserlängen von 3mm bis 100mm verwendet ist.

4. Bremsscheibe nach Anspruch 2 oder 3, **dadurch gekennzeichnet, dass** bei Verwendung von SiC als Hartstoffe eine Korngröße bei einem d50-Wert oberhalb von 10µm, insbesondere eine Korngröße von 100µm bis 1000µm vorliegt.

5. Bremsscheibe nach einem der vorhergehenden Ansprüche, **dadurch gekennzeichnet, dass** bei Hartstoffen mit körnigem Granulat (14) eine Mischung aus unterschiedlichen Korngrößen verarbeitet ist.

6. Bremsscheibe nach einem der vorhergehenden Ansprüche, **dadurch gekennzeichnet, dass** die Oberflächentopografie der Beschichtung (12) eine Rauheit mit der Kenngröße Rk>0,5µm aufweist.

7. Bremsscheibe nach einem der vorhergehenden Ansprüche, **dadurch gekennzeichnet, dass** die Beschichtung (12) auf die Tragscheibe (10) aufgebracht und anschließend durch Mikrowellenbestrahlung fest mit der Tragscheiben-Oberfläche verbunden wird.

8. Bremsscheibe nach einem der Ansprüche 1 bis 6, **dadurch gekennzeichnet, dass** die Beschichtung (12) durch Aufschmieren des Granulats (14) auf die Tragscheibe (10) oder mittels einer Suspension aufgebracht wird.

9. Bremsscheibe nach einem der vorhergehenden Ansprüche, **dadurch gekennzeichnet, dass** die Oberfläche der Reibringe zwischen 20vol.% und 100vol.% mit der Beschichtung (12) bedeckt ist, ggf. mit dazwischen liegenden Freistellen (16).

10. Bremsscheibe nach einem der vorhergehenden Ansprüche, **dadurch gekennzeichnet, dass** die Tragscheibe (10) auf Fe-Basis, insbesondere aus einer Graugusslegierung, hergestellt ist.

11. Bremsscheibe nach einem der vorhergehenden Ansprüche, **dadurch**
**gekennzeichnet, dass** die Beschichtung (12) nach deren Aufbringung durch spanende Nachbearbeitung auf eine Oberflächenrauheit im Bereich von 50µm>Ra>2µm eingestellt ist.

12. Verfahren zur Herstellung einer Bremsscheibe mit verschleißfester Beschichtung (12) für eine Scheibenbremse nach einem der vorhergehenden Ansprüche, in welchem Verfahren ein Granulat (14) aus Hartstoffen auf eine Tragscheibe (10) aufgebracht wird, und anschließend das Granulat (14) fest mit der Tragscheibe (10) verbunden wird, **dadurch gekennzeichnet, dass** die Befestigung des Granulats (14) durch Mikrowellenbestrahlung des auf der Tragscheiben-Oberfläche aufgebrachten Granulats (14) erfolgt.

13. Verfahren nach Anspruch 12, **dadurch gekennzeichnet, dass** das auf die Tragscheiben-Oberfläche aufgebrachte Granulat (14) durch mechanisches Anpressen in die Tragscheiben-Oberfläche eingepresst wird.

## Claims

1. Brake disc for a disc brake, in particular in motor vehicles, having a carrier disc (10) made of metal and a wear-resistant coating (12) on the friction rings thereof which interact with brake linings, wherein the coating (12) is formed by granules (14) of hard materials which are applied to the carrier disc (10) and bonded firmly to the carrier disc (10), **characterized in that** the granules (14) are metallurgically bonded firmly to the carrier disc (10) by means of microwave irradiation.

2. Brake disc according to Claim 1, **characterized in that** the hard materials are formed from carbon, silicon, from oxides, from carbides, in particular SiC, from borides, from silicides and/or from intermetallic compounds.

3. Brake disc according to Claim 1 or 2, **characterized in that** the carbon is used in the form of short fibres having fibre lengths of 3 mm to 100 mm.

4. Brake disc according to Claim 2 or 3, **characterized in that**, if SiC is used as the hard materials, a grain size with a d50 value of above 10 µm is present, in particular a grain size of 100 µm to 1000 µm.

5. Brake disc according to one of the preceding claims, **characterized in that** a mixture of different grain sizes is processed in the case of hard materials with granular granules (14).

6. Brake disc according to one of the preceding claims, **characterized in that** the surface topography of the coating (12) has a roughness with the characteristic variable Rk > 0.5 µm.

7. Brake disc according to one of the preceding claims, **characterized in that** the coating (12) is applied to the carrier disc (10) and then bonded firmly to the surface of the carrier disc by microwave irradiation.

8. Brake disc according to one of Claims 1 to 6, **characterized in that** the coating (12) is applied by rubbing the granules (14) onto the carrier disc (10) or by means of a suspension.

9. Brake disc according to one of the preceding claims, **characterized in that** the surface of the friction rings is covered with the coating (12) to an extent of between 20% by volume and 100% by volume, if appropriate with intermediate vacancies (16).

10. Brake disc according to one of the preceding claims, **characterized in that** the carrier disc (10) is produced on an Fe basis, in particular from a grey cast iron alloy.

11. Brake disc according to one of the preceding claims, **characterized in that** the coating (12), after it has been applied, is set by material-removing after-machining to a surface roughness in the range of 50 µm > Ra > 2 µm.

12. Method for producing a brake disc having a wear-resistant coating (12) for a disc brake according to one of the preceding claims, in which method granules (14) of hard materials are applied to a carrier disc (10), and then the granules (14) are bonded firmly to the carrier disc (10), **characterized in that** the granules (14) are fixed by subjecting the granules (14) applied to the surface of the carrier disc to microwave irradiation.

13. Method according to Claim 12, **characterized in that** the granules (14) applied to the surface of the carrier disc are pressed into the surface of the carrier disc by mechanical pressing.

## Revendications

1. Disque de frein pour un frein à disque, en particulier sur des véhicules automobiles, comprenant un disque support (10) en métal et un revêtement (12) résistant à l'usure sur ses bagues de frottement coopérant avec des garnitures de frein, le revêtement (12) étant formé par un granulat (14) à base de substances dures, qui est appliqué sur le disque support (10) et est relié fixement au disque support (10), **caractérisé en ce que** le granulat (14) est relié fixement de façon métallurgique au disque support (10) par irradiation avec des micro-ondes.

2. Disque de frein selon la revendication 1, **caractérisé en ce que** les substances dures sont formées à base de carbone, de silicium, d'oxydes, de carbures, en particulier des SiC, de borures, de siliciures et/ou de composés intermétalliques.

3. Disque de frein selon la revendication 1 ou 2, **caractérisé en ce que** le carbone est utilisé sous forme de fibres courtes avec des longueurs de fibre allant de 3 mm à 100 mm.

4. Disque de frein selon la revendication 2 ou 3, **caractérisé en ce que**, si on utilise des SiC comme substances dures, on a une grosseur de grain pour une valeur d50 au-dessus de 10 µm, en particulier une grosseur de grain allant de 100 µm à 1000 µm.

5. Disque de frein selon l'une quelconque des revendications précédentes, **caractérisé en ce que**, dans le cas de substances dures avec du granulat (14) granuleux, un mélange de différentes grosseurs de grain est traité.

6. Disque de frein selon l'une quelconque des revendications précédentes, **caractérisé en ce que** la topographie de surface du revêtement (12) présente une rugosité avec la grandeur caractéristique Rk>0,5 µm.

7. Disque de frein selon l'une quelconque des revendications précédentes, **caractérisé en ce que** le revêtement (12) est appliqué sur le disque support (10) et est relié ensuite par irradiation avec des micro-ondes de façon fixe à la surface du disque support.

8. Disque de frein selon l'une quelconque des revendications 1 à 6, **caractérisé en ce que** le revêtement (12) est appliqué par lubrification du granulat (14) sur le disque support (10) ou au moyen d'une suspension.

9. Disque de frein selon l'une quelconque des revendications précédentes, **caractérisé en ce que** la surface des bagues de frottement est recouverte entre 20 % de volume et 100 % de volume avec le revêtement (12), éventuellement avec des endroits libres (16) intercalés.

10. Disque de frein selon l'une quelconque des revendications précédentes, **caractérisé en ce que** le disque support (10) est fabriqué à base de Fe, en particulier à base d'un alliage de fonte grise.

11. Disque de frein selon l'une quelconque des revendications précédentes, **caractérisé en ce que** le revêtement (12) est réglé après son application par un usinage ultérieur par enlèvement de copeaux sur une rugosité de surface dans la plage de 50 µm>Ra>2 µm.

12. Procédé pour fabriquer un disque de frein avec un revêtement (12) résistant à l'usure pour un frein à disque selon l'une quelconque des revendications précédentes, procédé dans lequel un granulat (14) à base de substances dures est appliqué sur un disque support (10), et le granulat (14) est relié ensuite de façon fixe au disque support (10), **caractérisé en ce que** la fixation du granulat (14) s'effectue par irradiation avec des micro-ondes du granulat (14) appliqué sur la surface du disque support.

13. Procédé selon la revendication 12, **caractérisé en ce que** le granulat (14) appliqué sur la surface du disque support est fixé par compression mécanique dans la surface du disque support.
